# EUROPEAN PATENT SPECIFICATION

(11) **EP 4 151 799 B1**
(45) Date of publication and mention of the grant of the patent: **04.09.2024**
(21) Application number: 22184861.7
(22) Date of filing: 14.07.2022
(51) Int. Cl.: D21D 1/20, D21D 5/02, D21C 9/00, D21H 11/18

(54) **SYSTEM AND METHOD OF PRODUCING MICRO FIBRILLATED CELLULOSE (MFC)**
SYSTEM UND VERFAHREN ZUM PRODUZIEREN VON MIKROFIBRILLIERTER CELLULOSE (MFC)
SYSTÈME ET PROCÉDÉ DE PRODUCTION DE CELLULOSE MICRO FIBRILLÉE (MFC)

(30) Priority: 03.09.2021 FI 20215931
(43) Date of publication of application: 22.03.2023
(73) Proprietor: Valmet Technologies Oy, 02150 Espoo (FI)
(72) Inventor: AHO, Tuomo, 33840 Tampere (FI); HUHTANEN, Juha-Pekka, 33840 Tampere (FI)
(74) Representative: Berggren Oy

(56) References cited:
- WO-A1-2012/072874
- WO-A1-2017/033125
- WO-A1-2020/188112

## Description

### Technical field

In general, present invention relates to producing of micro fibrillated cellulose (MFC). More especially the present invention relates to a system of producing MFC according to preamble part of the independent system claim and to a method of producing MFC according to preamble part of the independent method claim.

### Background

Micro fibrillated cellulose (MFC) comprises very thin cellulose fibers, typically width of which is typically 10-100 nm and length of which is typically between 0,5-10 µm. MFC also typically by definition includes nano fibrillated cellulose. MFC is typically processed of wood based cellulose fibers but it can also be processed of other plant based, non-wood-based sources for example agricultural-based fibers such as straw pulp, bagasse, bamboo and cotton or recycled cotton from recycled textile recycling.

It is known from prior art to refine stock in a refiner to mechanically treat and modify fibers to provide desired properties to the cellulose stock for production of selected fiber web grade with required properties. Mechanical treatment can be improved by chemical and/or enzyme additions. In connection of production of MFC various technologies are used, for example Masuko grinder technology, disk technology, high consistency technology, homogenization technology, micro fluidization technology, extruding technology, disperser technology. Typically, MFC is produced with different types of refiner by recirculating stock from outlet to inlet several times to achieve MFC with desired size and size variation.

In known production systems of MFC one major disadvantage is very high energy per capita consumption, typically over 2 MWh/t. Additionally, production capacity of the known systems is very limited and thus, its scaling to industrial use is challenging. Also, investment costs are high, which leads to expensive market price of MFC. In systems, where chemicals and/or enzymes are used in production of MFC, some of the chemicals used may limit usage of MFC to certain end products.

Especially, in MFC production with refining, the applied energy needed is high and major part of that will dissipated to stock and yielding the high stock temperature. Therefore, there exist a strong demand of temperature control of the stock in the MFC production, in particular in connection with refining the MFC stock, to ensure efficient refining results and production at higher capacities. A method for producing nanocellulose is disclosed in WO 2012/072874 A1.

Due to the high applied energy and the multi-recycling of the stock, the process temperatures are at high levels. The high temperature levels of the stock will affect unfavorably in succeeding process stages and may thus limit quality of MFC products. The high temperature levels of the stock may also cause health, safety and environmental (HSE) risks due to the high temperature of equipment surfaces. For example, seals made of rubber can be damaged due to the high temperatures and thus, high temperature stock may escape from the system and cause HSE-risks to operating personnel.

An object of the invention is to create a system and method of producing MFC, in which the disadvantages and problems of prior art are eliminated or at least minimized.

An object of the invention is to create an improved system and method of producing MFC, in which new, alternative ways of producing MFC are provided, especially in view of energy consumption.

A particular, non-binding, object of the invention is to create an effective system and method of producing MFC by mechanical or by mechanochemical production process, in particular using refining by a conical refiner.

### Summary

In order to achieve the above-mentioned objects, the system of producing MFC according to the invention is mainly characterized by the features of the characterizing clause of the independent system claim and the method of producing MFC according to the invention is in turn mainly characterized by the features of the characterizing clause of the independent method claim. Advantageous embodiments and features are disclosed in the dependent claims.

The disclosed system of producing MFC comprises at least one refiner, wherein the refiner comprises means for refining a stock in at least two refining stages, advantageously at least two refiners for refining the stock in at least two refining stages, and the refiners comprise a number of refining bars, wherein the refining bars have width of 0.5 - 2.0 mm, preferably 0.8-1.6 mm, more preferably 1.0 -1.2 mm, height less than 7 mm, preferably less than 5 mm and groove width of 0.5-3 mm, preferably 0.8-2.2 mm, more preferably 1-2 mm, wherein the system further comprises at least one screen for screening the stock and that each of the screens comprise a screen basket, which screen basket advantageously has holes with diameter of 0.02 - 0.4 mm, preferably 0.05-0.3 mm or slots with width less than 0.2, preferably less than 0.15 mm.

According to an advantageous feature at least two refiners are located in series in the system.

According to an advantageous feature at least two refiners are located parallel in the system.

According to an advantageous feature the refiners comprise a rotor, a stator and wherein the rotor has blade angle in range of +/- 50°, preferably +/- 30° and the stator has blade angel in range of +/-30°, preferably in range of +/-10°.

According to an advantageous feature the system comprises a pulper for slushing the stock.

According to an advantageous feature the system comprises a chemical and/or enzyme preparation device connected to a device of the system located before at least one of the refiners.

According to the invention the system comprises a temperature control device for adjusting the temperature of the stock to temperature range of 40 - 70 °C.

The temperature control system comprises advantageously as the temperature control device a heat exchanger, for example a tube-type heat exchanger either concurrent or countercurrent heat exchanger or a spiral-type heat exchanger or a tube and shell -type heat exchanger or an absorption pump temperature control device. Tube heat exchangers and spiral heat exchangers are beneficial in view of costs and availability. Preferably at least 50 % of the stock flow flowing in the refining loop is configured to also flow in the temperature control system flow, more preferably at least 75 % of the stock flow flowing in the refining loop is configured to also flow in the temperature control system flow. By the temperature adjustment and control succeeding process stages are affected favorably and thus quality of MFC products can be improved. Additionally, by the temperature adjustment and control, health, safety and environmental (HSE) risks are eliminated or at least minimized.

According to an advantageous feature the system comprises at least one reject line and the reject line is connected from the screen to the refiner feed, advantageously 20-40 % of the refiner feed flow is flown from the screen.

According to an advantageous feature the system comprises at least one recirculation line back to a refiner feed, advantageously 10-50 % of refiner feed flow is flown from the recirculation line.

According to an advantageous feature the system is configured to be operated as a continuous process.

According to an advantageous feature the system is configured to refine the pulp stock in at least one refining stage in consistency of 3 - 5%, and to screen the pulp stock in at least one screening stage in at least one screen in consistency of 0,5-5 %.

The disclosed method of producing MFC comprises at least two refining stages, in which a pulp stock is refined in at least one refining stage in consistency of 3 - 5%, and the method comprises at least one screening stage in at least one screen in consistency of 0,5-5 %.

According to an advantageous feature the refining of the pulp stock is mechanochemical refining.

According to an advantageous feature the method is operated as a continuous process.

According to an advantageous feature the method comprises a slushing stage in a pulper.

According to an advantageous feature the method comprises a thickening stage for thickening the stock to storage consistency.

According to the invention in the method temperature of the stock is adjusted to temperature range of 40 - 70 °C.

According to an advantageous feature in the method at least 50 % of the stock flow flowing in the refining loop is also flowing in the temperature control system flow, more preferably at least 75 % of the stock flow flowing in the refining loop is also flowing in the temperature control system flow.

Advantageously, the temperature of the stock is adjusted by a temperature control system. A temperature control system may comprise for example a temperature control device. The temperature control system comprises advantageously as the temperature control device a heat exchanger, for example a tube-type heat exchanger either concurrent or countercurrent heat exchanger or a spiral-type heat exchanger or a tube and shell -type heat exchanger or an absorption pump temperature control device. By the temperature adjustment and control succeeding process stages are affected favorably and thus quality of MFC products can be improved. Additionally, by the temperature adjustment and control health, safety and environmental (HSE) risks are eliminated or at least minimized.

According to an advantageous feature in the method in the refining stage the refining bars have width of 0.5 - 2.0 mm, preferably 0.8-1.6 mm, more preferably 1.0 -1.2 mm, height less than 7 mm, preferably less than 5 mm and groove width of 0.5-3 mm, preferably 0.8-2.2 mm, more preferably 1-2 mm, and the screening stage is performed by at least one screen for screening the stock and that each of the screens comprise a screen basket, which screen basket advantageously has holes with diameter of 0.02 - 0.4 mm, preferably 0.05-0.3 mm or slots with width less than 0.2, preferably less than 0.15 mm.

According to an advantageous aspect in the system and in the method of producing micro fibrillated cellulose (MFC) pulp stock is slushed in a pulper and thereafter optionally the pulp stock is fed to a dump tower. Optionally, the processing of the pulp stock can be enhanced by enzyme addition in the pulper or in the optional dump tower. After this stage the pulp stock is guided to refining cycling of the pulp stock in the refiner in consistency of 3-5 %. There are at least two refining stages. After the refining the pulp stock is screened in a screen in consistency range of 0,5-5 %. Reject flow from the screening in the screen can be returned to refining in the refiner feed or guided to separate refining stage either thickened or non-thickened. After screening the accept flow is thickened to storage consistency and guided forward to the next unit process. The water of thickening stage can optionally be treated by dissolved air flotation (DAF) or by ultra-filtering or can be used in another process as dilution water or can be guided to wastewater treatment.

This provides that great volumes of MFC can be produced energy efficiently, and thus costs of high degree processed end products of MFC are significantly decreased.

Advantageously, in the refining bars have width of 1.2 mm, heigh of 5 mm and groove width of 2 mm. Advantageously, the rotor blade angle is 30° and the stator blade angel is 10°. The target is to maximize the cutting length in kilometers per revolutions, the actual number depends on the size and the type of the refiner.

Alternatively advantageously, in the refining bars have width of 1 mm, heigh of 2 mm and groove width of 1 mm. Advantageously, the rotor blade angle is 30° and the stator blade angel is 10°. The target is to maximize the cutting length in kilometers per revolutions, the actual number depends on the size and the type of the refiner.

Advantageously, the refining consistency is at least 4.5 %, by which high quality MFC with over 90% fines content (measured by fiber analyzer Fiber Image Analyzer FS5) is produced by very low specific energy consumption of less than 1 MWh/T.

Advantageously, by conducting mid-screening in between at least two refining stages in consistency of 2 - 5 %, high quality MFC with over 90% fines content (measured by fiber analyzer Fiber Image Analyzer FS5) is produced with even lower specific energy consumption of less than 0.5 MWh/T and without the need to use a heat exchanger.

The screen basket advantageously has holes with diameter of 0,02 - 0,3 mm or slots with less than 0,15 mm width, by which it is possible to return reject flow with the longest fiber fraction back to the refining and forward the accept flow with the smallest fibers. Advantageously, the screen basket is a pressure screen basket.

The final screening is advantageously conducted in consistency of 1 - 2 %, which provides for even higher quality MFC with over 95 % fines content, (measured by fiber analyzer Fiber Image Analyzer FS5) is produced by very low specific energy consumption of less than 1 MWh/T.

According to the invention in the system and in the method of producing micro fibrillated cellulose (MFC) temperature of the pulp stock is controlled and the temperature of the pulp stock is controlled at either in inlet or outlet side of refining. The temperature can be controlled in the feed or in a discharge tank or in a recycling line or in a separate loop of the process. The temperature can be controlled by a heat exchanger or by using absorption pump temperature control systems. Tank/-s of the system can have a temperature control device for example a blower or a fan or they can have temperature-controlled mantels or there can be coil/-s or other temperature control element/-s inside the tank/s. The temperature control can also be provided in pipes connecting parts of the system.

According to the invention by the temperature control the temperature of pulp stock is adjusted to temperature range 40 - 70 °C. Thus, advantageously the temperature control means are provided for cooling of the pulp stock in the system.

The system and the method are suitable for processing different types of pulp stocks for example wood based cellulose fibers, for example pine or eucalyptus, but in can also be processed of other plant based, non-wood-based sources for example agricultural-based fibers such as straw pulp, bagasse, bamboo, cotton or recycled cotton from recycled textile recycling. The system and the method are suitable for processing recycled pulp stocks, for example DIP and OCC, and bio-based pulp stocks and recycled textile stocks.

The exemplifying embodiments of the invention presented in this description are not to be interpreted to pose limitations to the applicability of the appended claims. The verb "to comprise" and its derivatives are used in this description as an open limitation that does not exclude the existence of also unrecited features.

### Brief description of the drawings

In the following the invention is explained in detail with reference to the accompanying drawing to which the invention is not to be narrowly limited.
In figure 1 is shown schematically an advantageous example of a system of producing micro fibrillated cellulose.
In figures 2A-2B is shown schematically advantageous examples of a system of producing micro fibrillated cellulose, in which refining comprises two refining stages.
In figure 3 is shown schematically an advantageous example of a system of producing micro fibrillated cellulose with two refining stages with an intermediate screening stage.
In figure 4 is shown schematically an advantageous example of a system of producing micro fibrillated cellulose.
In figure 5 is shown schematically an advantageous example of a temperature control system of a system of producing micro fibrillated cellulose.
In figures 6A - 6E is shown schematically advantageous examples of temperature controls systems of a system of producing micro fibrillated cellulose.

### Detailed description

During the course of the following description like numbers and signs will be used to identify like elements according to the different views which illustrate the invention and its advantageous examples. In the figure some repetitive reference signs have been omitted for clarity reasons.

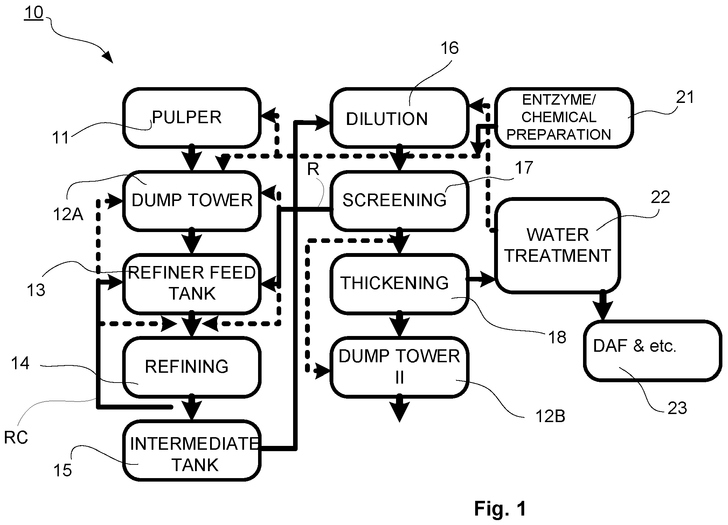

In figure 1 is shown schematically an example of a system 10 and the method of producing micro fibrillated cellulose (MFC). The pulp stock is slushed in a pulper 11 in consistency of 4-6 % and thereafter optionally the pulp stock is fed to a first dump tower 12A. Optionally, the processing of the pulp stock can be enhanced by enzyme addition from a chemical and/or enzyme preparation device 21 in the pulper 11 or in the optional first dump tower 12A. By this energy savings can be enhanced using the enzyme as catalysator for the processing. After this stage the pulp stock is guided directly or via an optional refiner feed tank 13 to refining of the pulp stock in the refiner 14 in consistency of 3-5 %. There is at least two refining stages. In case the optional refiner feed tank 13 is used there can be recirculation RC from the refiner 14 back to the refiner feed tank 13. After the refining in the refiner 14 the pulp stock is guided directly or via an optional intermediate tank 15 and/or optional dilution 16 to a screen 17. The pulp stock is screened in the screen 17 in consistency of 1-2 % or in consistency of 3-5 %. Reject flow R from the screening in the screen 17 can be returned to refining in the refiner 14 via the optional refiner feed tank 13 or guided directly to the refiner 14 or guided to separate refining stage. After screening the accept flow forwards is guided to an optional thickening stage in a thickening device 18 or directly to a second dump tower 12B. The reject flow can also be returned to the reining after the thickening. After refining the accept flow is optionally thickened to storage consistency and thereafter guided to the second dump tower 12B. The water of thickening stage can be treated by a water treatment device 22 with water treatment equipment 23, for example by a dissolved air flotation (DAF) or by ultra-filtering.

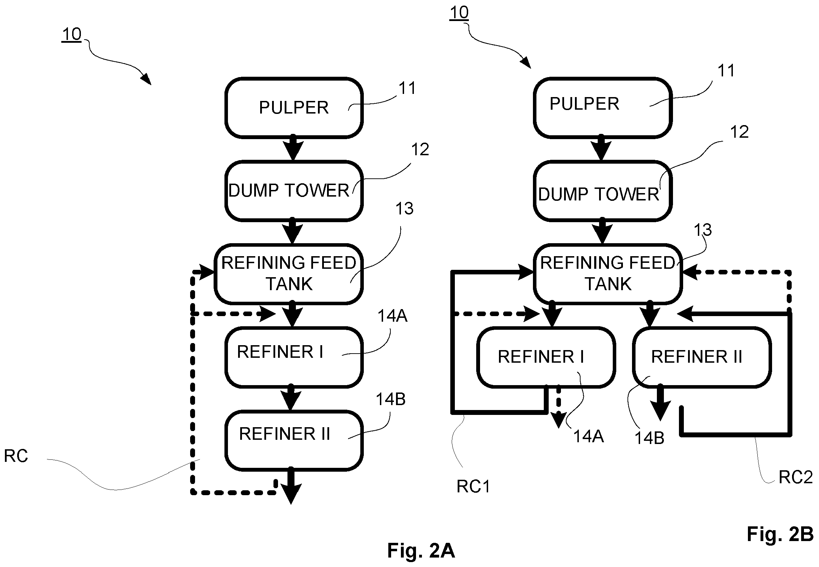

In the system 10 of the examples of the figures 2A-2B the refining comprises two refining stages, first refining stage 14A and second refining stage 14B, which are in series, fig. 2A or parallel, fig. 2B. In both examples the pulp stock is slushed in a pulper 11 in consistency of 4-6 % and thereafter the pulp stock is fed to a dump tower 12. After this stage the pulp stock is guided directly or via an optional refiner feed tank 13 to refining stages 14A, 14B of the pulp stock in consistency of 3-5 %. In the example of figure 2A, in which the refining stages 14A, 14B are in series, there is a recirculation line RC from the second refining stage 14B its feed. In the example of figure 2B, in which the refining stages 14A, 14B are in parallel, there is a first recirculation line RC1 from the first refining stage 14B its feed or to the optional refiner feed tank 13. There is also a second recirculation line RC2 from the second refining stage 14B to its feed. After the refining in the refiner 14 the pulp stock is guided forwards as explained in connection with the example of figure 1.

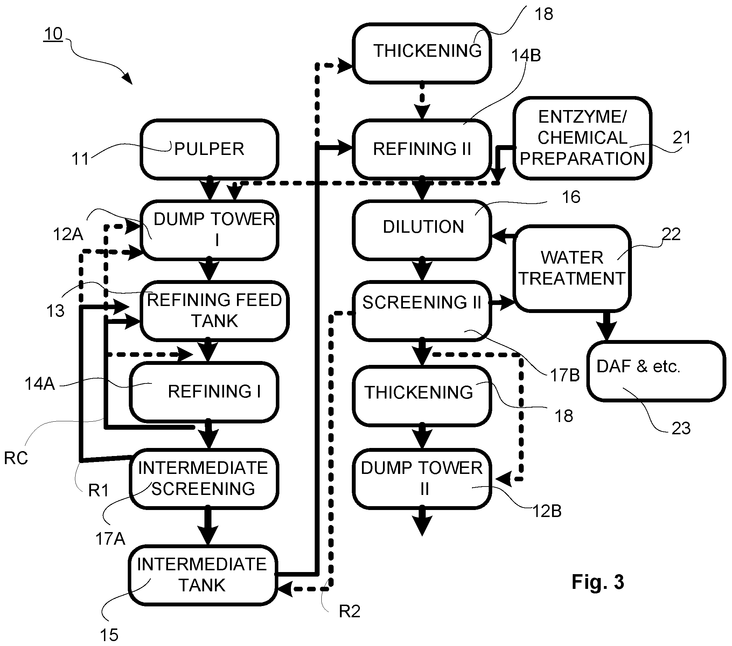

In figure 3 is shown example of the system 10 with two refining stages 14A, 14B with an intermediate screening stage 17A. The pulp stock is slushed in a pulper 11 in consistency of 4-6 % and thereafter optionally the pulp stock is fed to a first dump tower 12A. Optionally, the processing of the pulp stock can be enhanced by enzyme addition from a chemical and/or enzyme preparation 21 in the pulper 11 or in the optional first dump tower 12A. After this stage the pulp stock is guided directly or via an optional refiner feed tank 13 to refining stages 14A, 14B of the pulp stock in consistency of 3-5 %. In the example there is a recirculation line RC from the first refining stage 14A its feed or to the optional refiner feed tank 13. After the refining in the first refining stage 14A the pulp stock is guided to the intermediate screening stage in an intermediate screen 17A. The pulp stock is screened in the intermediate screen 17A in consistency of 1-2 % or in consistency of 3-5 %. Reject flow R from the intermediate screening in the intermediate screen 17A can be returned to first refining stage 14A. After the intermediate screening stage 17A the accept flow forwards is guided to a second refining stage 14B. After the second refining stage 14B the pulp stock is guided directly or via an optional dilution 16 and/or via an optional screening stage 17B in an optional second screen 17B. The pulp stock is screened in the optional second screen 17B in consistency of 1-2 % or in consistency of 3-5 %. Reject flow R from the optional second screening 17B can be returned to the second refining stage 14B. After the second screening stage 17B the accept flow forwards is guided to an optional thickening stage in a thickening device 18 or directly to a second dump tower 12B. After refining the accept flow is optionally thickened to storage consistency and thereafter guided to the second dump tower 12B. The water of thickening stage can be treated by a water treatment device 22 with water treatment equipment 23, for example by a dissolved air flotation (DAF) or by ultra-filtering.

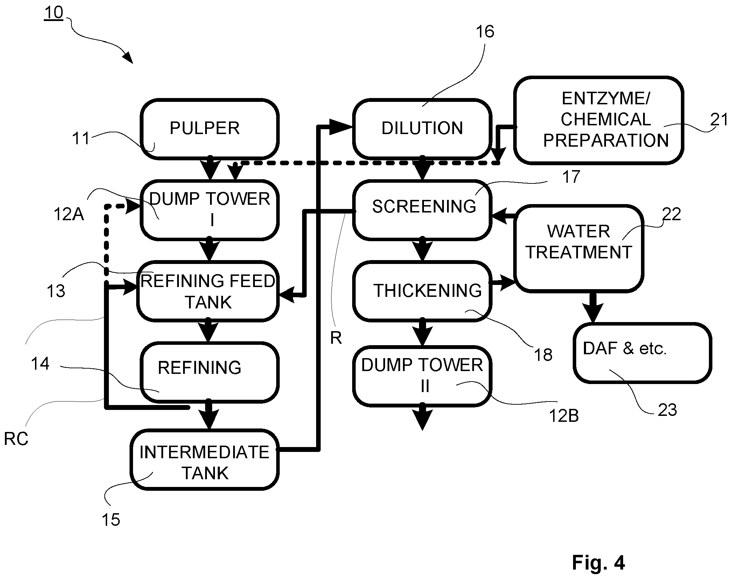

In figure 4 is shown example of the system 10 with screening 17. The pulp stock is slushed in a pulper 11 in consistency of 4-6 % and thereafter optionally the pulp stock is fed to a first dump tower 12A. Optionally, the processing of the pulp stock can be enhanced by enzyme addition from a chemical and/or enzyme preparation 21 in the pulper 11 or in the optional first dump tower 12A. After this stage the pulp stock is guided directly or via an optional refiner feed tank 13 to refining 14 of the pulp stock in consistency of 3-5 %. In the example there is a recirculation line RC from the refining 14 to the optional refiner feed tank 13 or to the dump tower 12A. After the refining in the refining 14 the pulp stock is guided to a tank 15 and thereafter to a dilution stage 15 and then guided in consistency of 1-2 % to the screening stage in a screen 17. Reject flow R from the screening in the screen 17 can be returned to the optional refiner feed tank 13 or to the refining stage 14. After the screening stage 17 the accept flow forwards is guided to a thickening stage in a thickening device 18 and thereafter to the second dump tower 12B. The water of thickening stage can be treated by a water treatment device 22 with water treatment equipment 23, for example by a dissolved air flotation (DAF) or by ultra-filtering.

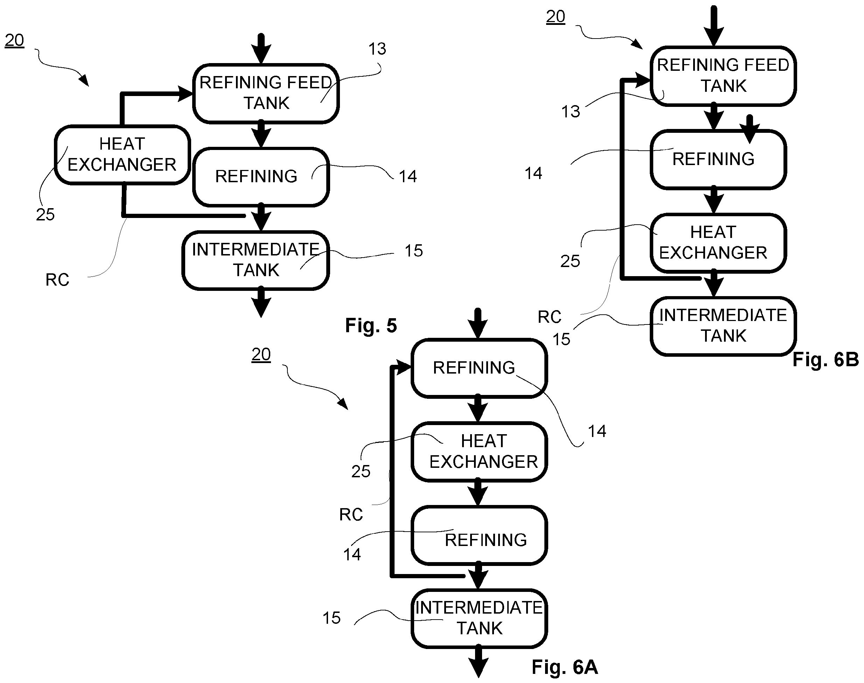

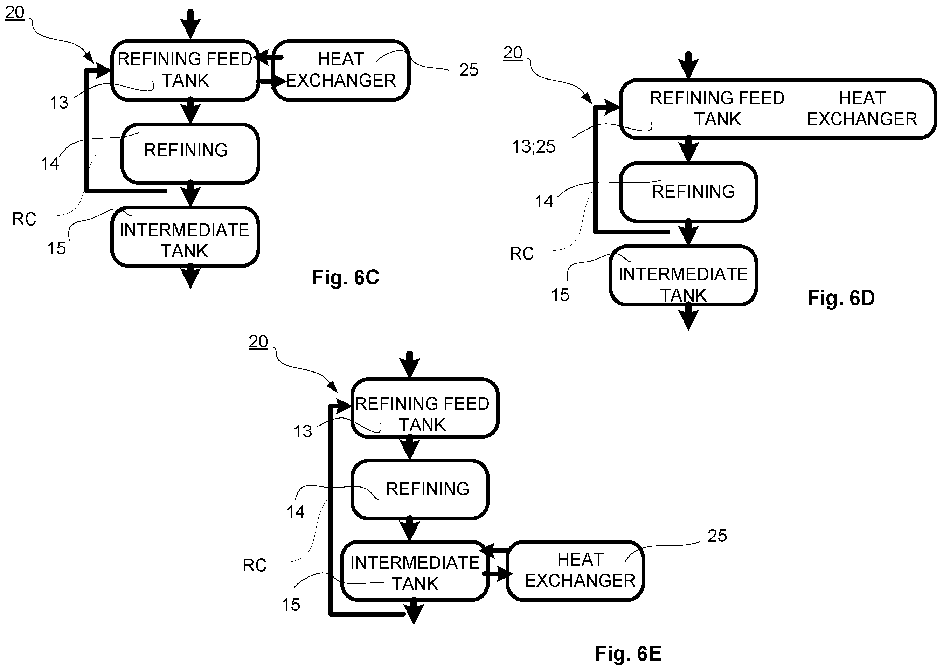

In figure 5 is shown an example of a temperature control system 20 of a system and a method of producing micro fibrillated cellulose (MFC). In the example of the figure 6 the pulp stock is fed from a feed tank 13 to refining 14 and thereafter to a tank 15, for example a discharge tank. The temperature of the pulp stock is controlled by a temperature control device 25 located in a recirculation line RC from outlet of the refining 14 to the feed tank 13. The temperature control device 25 can be for example a heat exchanger or an absorption pump temperature control system. By the temperature control the temperature of pulp stock is adjusted to temperature range 40 - 70 °C. Thus, typically the temperature control device 25 cools of the pulp stock in the system.

In figures 6A - 6E is shown schematically advantageous examples of temperature controls systems 20 of a system 10 of producing micro fibrillated cellulose. Preferably at least 50 % of the stock flow flowing in the refining loop is configured to also flow in the temperature control system flow, more preferably at least 75 % of the stock flow flowing in the refining loop is configured to also flow in the temperature control system flow.

In figure 6A is shown an example of a temperature control system 20 of a system and a method of producing micro fibrillated cellulose (MFC). In the example of the figure 6A the pulp stock is fed from a feed tank 13 to a temperature control device 25 and therefrom to refining 14 and thereafter to a tank 15, for example a discharge tank. There is also a recirculation line RC from outlet of the refining 14 to the feed tank 13. The temperature control system 20 comprises at least one temperature control device 25, which is advantageously a heat exchanger, for example a tube-type heat exchanger either concurrent or countercurrent heat exchanger or a spiral-type heat exchanger or a tube and shell -type heat exchanger or an absorption pump temperature control device.

In figure 6B is shown an example of a temperature control system 20 of a system and a method of producing micro fibrillated cellulose (MFC). In the example of the figure 6B the pulp stock is fed from a feed tank 13 to refining 14 and therefrom to a temperature control device 25 and thereafter to a tank 15, for example a discharge tank. There is also a recirculation line RC from outlet of the temperature control device 25 to the feed tank 13. The temperature control system 20 comprises at least one temperature control device 25, which is advantageously a heat exchanger, for example a tube-type heat exchanger either concurrent or countercurrent heat exchanger or a spiral-type heat exchanger or a tube and shell -type heat exchanger or an absorption pump temperature control device.

In figure 6C is shown an example of a temperature control system 20 of a system and a method of producing micro fibrillated cellulose (MFC). In the example of the figure 6C the pulp stock is fed from a feed tank 13 to refining 14 and thereafter to a tank 15, for example a discharge tank. The feed tank 13 is connected to a temperature control device 25. There is also a recirculation line RC from outlet of the refiner 14 to the feed tank 13. The temperature control system 20 comprises at least one temperature control device 25, which is advantageously a heat exchanger, for example a tube-type heat exchanger either concurrent or countercurrent heat exchanger or a spiral-type heat exchanger or a tube and shell -type heat exchanger or an absorption pump temperature control device.

In figure 6D is shown an example of a temperature control system 20 of a system and a method of producing micro fibrillated cellulose (MFC). In the example of the figure 6D the pulp stock is fed from a feed tank 13 to refining 14 and thereafter to a tank 15, for example a discharge tank. The feed tank 13 is provided with a temperature control device 25. There is also a recirculation line RC from outlet of the refiner 14 to the feed tank 13. The temperature of the feed tank 13 can be controlled using as the temperature control device 25 for example a blower or a fan or temperature-controlled mantel of the feed tank 13 or there can be coil/-s or other temperature control element/-s inside the feed tank 13.

In figure 6E is shown an example of a temperature control system 20 of a system and a method of producing micro fibrillated cellulose (MFC). In the example of the figure 6E the pulp stock is fed from a feed tank 13 to refining in a refiner 14 and thereafter to a tank 15, for example a discharge tank. The tank 15 is connected to a temperature control device 25. There is also a recirculation line RC from outlet of the tank 15 to the feed tank 13. The temperature control device 25 can be for example a heat exchanger or an absorption pump temperature control system. The tank 15 may also be optionally provided with an additional temperature control device 25. The temperature of the tank 15 can be controlled using as the additional temperature control device 25 for example a blower or a fan or temperature-controlled mantel of the tank 15 or there can be coil/-s or other temperature control element/-s inside the tank 15.

### Reference sings used in the drawing:

10 system
11 pulper
12, 12A, 12B dump tower
13 refiner feed tank
14, 14A, 14B refining
15 intermediate tank
16 dilution device
17, 17A, 17B screening
18 thickening device
20 temperature control system
21 chemical and/or enzyme preparation device
22 water treatment device
23 water treatment equipment
25 temperature control device
R, R1, R2 reject flow
RC, RC1, RC2 recirculation

## Claims

1. System of producing MFC (micro fibrillated cellulose), which system (10) comprises at least one refiner (14, 14A, 14B), which refiner comprises means for refining a stock in at least two refining stages, advantageously at least two refiners (14, 14A, 14B) for refining the stock in at least two refining stages, and the refiners comprise a number of refining bars,
which refining bars have width of 0.5 - 2.0 mm, height less than 7 mm, and groove width 0.5-3 mm,
which system (10) further comprises at least one screen (17, 17A, 17B) for screening the stock and each of the screens comprise a screen basket, which screen basket advantageously has holes with diameter of 0.02 - 0.4 mm, or slots with width less than 0.2 mm,
wherein the system (10) comprises a temperature control device (25) for adjusting the temperature of the stock to temperature range of 40 - 70 °C and that the temperature of the stock is configured to be controlled at either in inlet or outlet side of the refiner.

2. System according to claim 1, wherein at least two refiners (14, 14A, 14B) are located in series in the system (10).

3. System according to claim 1, wherein at least two refiners (17, 17A, 17B) are located parallel in the system (10).

4. System according to any of previous claims, wherein the refiners comprise a rotor, a stator and that the rotor has blade angle in range of +/- 50° and that the stator has blade angle in range of +/-30°.

5. System according to any of previous claims, wherein the system comprises a chemical and/or enzyme preparation device (21) connected to a device of the system (10) located before at least one of the refiners (17, 17A, 17B).

6. System according to any of previous claims, wherein the system (10) comprises at least one reject line (R) and that the reject line (R) is connected from the screen to the refiner feed, advantageously 20-40 % of the refiner feed flow is flown from the screen.

7. System according to any of previous claims, wherein the system (10) comprises at least one recirculation line (RC) back to a refiner feed, advantageously 10-50 % of refiner feed flow is from the recirculation line.

8. System according to any of the previous claims, wherein the system (10) is configured to be operated as a continuous process.

9. Method of producing MFC, which method comprises at least two refining stages, in which a pulp stock is refined in at least one refining stage (17, 17A, 17B) in consistency of 3 - 5%, and which method comprises at least one screening stage in at least one screen (17, 17A, 17B) in consistency of 0,5-5 %, wherein in the method temperature of the stock is adjusted to temperature range of 40 - 70 °C by a temperature control device (25) and that the temperature of the stock is controlled at either in inlet or outlet side of the refining.

10. Method according to claim 9, wherein the refining of the pulp stock is mechanochemical refining.

11. Method according to claim 9 or 10, wherein the method is operated as a continuous process.

12. Method according to any of claims 9-11, wherein the method comprises a thickening stage for thickening the stock to storage consistency.

13. Method according to any of claims 9-12, wherein in the method at least 50 % of the stock flow flowing in a refining loop provided by a recirculation line (RC) is also flowing in the temperature control system flow.

## Patentansprüche

1. System zum Herstellen von MFC (mikrofibrillierter Cellulose), wobei das System (10) mindestens einen Refiner (14, 14A, 14B) umfasst, wobei der Refiner Mittel zum Mahlen eines Materials in mindestens zwei Mahlstufen, vorteilhafterweise mindestens zwei Refiner (14, 14A, 14B) zum Mahlen des Materials in mindestens zwei Mahlstufen, umfasst und die Refiner eine Anzahl von Mahlstegen umfassen,
wobei die Mahlstege eine Breite von 0,5 bis 2,0 mm, eine Höhe von weniger als 7 mm und eine Rillenbreite von 0,5 bis 3 mm aufweisen, wobei das System (10) ferner mindestens ein Sieb (17, 17Am 17B) zum Sieben des Materials umfasst und jedes der Siebe einen Siebkorb umfasst, wobei der Siebkorb vorteilhafterweise Löcher mit einem Durchmesser von 0,02 bis 0,4 mm oder Schlitze mit einer Breite von weniger als 0,2 mm aufweist,
wobei das System (10) eine Temperaturregelungseinrichtung (25) zum Einstellen der Temperatur des Materials auf einen Temperaturbereich von 40 bis 70 °C umfasst und wobei die Temperatur des Materials dafür konfiguriert ist, auf entweder der Einlass- oder der Auslassseite des Refiners geregelt zu werden.

2. System nach Anspruch 1, wobei mindestens zwei Refiner (14, 14A, 14B) in Reihe in dem System (10) angeordnet sind.

3. System nach Anspruch 1, wobei mindestens zwei Refiner (17, 17A, 17B) parallel in dem System (10) angeordnet sind.

4. System nach einem der vorhergehenden Ansprüche, wobei die Refiner einen Rotor, einen Stator umfassen und wobei der Rotor einen Rakelwinkel in dem Bereich von +/- 50° aufweist und wobei der Stator einen Rakelwinkel in dem Bereich von +/- 30° aufweist.

5. System nach einem der vorhergehenden Ansprüche, wobei das System eine chemische und/oder enzymatische Aufbereitungseinrichtung (21) umfasst, die mit einer Einrichtung des Systems (10) verbunden ist, die vor mindestens einem der mindestens Refiner (17, 17A, 17B) angeordnet ist.

6. System nach einem der vorhergehenden Ansprüche, wobei das System (10) mindestens eine Ausschussbahn (R) umfasst und wobei die Ausschussbahn (R) von dem Sieb bis zu der Refiner-Einspeisung angeschlossen ist, wobei vorteilhafterweise 20 bis 40 % des Refiner-Einspeisungsstroms von dem Sieb strömen gelassen wird.

7. System nach einem der vorhergehenden Ansprüche, wobei das System (10) mindestens eine Wiederumlaufbahn (RC) zurück zu einer Refiner-Einspeisung umfasst, wobei vorteilhafterweise 10 bis 50 % des Refiner-Einspeisungsstroms von der Wiederumlaufbahn ist.

8. System nach einem der vorhergehenden Ansprüche, wobei das System (10) dafür konfiguriert ist, als ein kontinuierlicher Prozess betrieben zu werden.

9. Verfahren zum Herstellen von MFC, wobei das Verfahren mindestens zwei Mahlstufen umfasst, in denen ein Faserstoffmaterial in mindestens einer Mahlstufe (17, 17A, 17B) in einer Konsistenz von 3 bis 5 % gemahlen wird, und wobei das Verfahren mindestens eine Siebstufe in mindestens einem Sieb (17, 17A, 17B) in einer Konsistenz von 0,5 bis 5 % umfasst,
wobei in dem Verfahren eine Temperatur des Materials durch eine Temperaturregelungseinrichtung (25) auf einen Temperaturbereich von 40 bis 70 °C eingestellt wird und wobei die Temperatur des Materials auf entweder der Einlass- oder der Auslassseite des Mahlens geregelt wird.

10. Verfahren nach Anspruch 9, wobei das Mahlen des Faserstoffmaterials mechanisch-chemisches Mahlen ist.

11. Verfahren nach Anspruch 9 oder 10, wobei das Verfahren als ein kontinuierlicher Prozess betrieben wird.

12. Verfahren nach einem der Ansprüche 9 bis 11, wobei das Verfahren eine Eindickungsstufe zum Eindicken des Materials auf Lagerungskonsistenz umfasst.

13. Verfahren nach einem der Ansprüche 9 bis 12, wobei in dem Verfahren mindestens 50 % des Materialstroms, der in einer Mahlschleife fließt, die durch eine Wiederumlaufbahn (RC) bereitgestellt wird, ebenfalls in dem Temperaturregelungssystem-Strom fließt.

## Revendications

1. Système de production de MFC (cellulose microfibrillée), lequel système (10) comprend au moins un raffineur (14, 14A, 14B), lequel raffineur comprend un moyen de raffinage d'une matière dans au moins deux stades de raffinage, avantageusement deux raffineurs (14, 14A, 14B), pour raffiner la matière dans au moins deux stades de raffinage, et que les raffineurs comprennent un certain nombre de barres de raffinage, lesquelles barres de raffinage ont une largeur de 0,5 à 2,0 mm, une hauteur de moins de 7 mm et une largeur de gorge de 0,5 à 3 mm, lequel système (10) comprend en outre au moins un crible (17, 17A, 17B) pour cribler la matière et chacun des cribles comprend un panier de crible, lequel panier de crible comporte avantageusement des trous d'un diamètre de 0,02 à 0,4 mm, ou des fentes d'une largeur de moins de 0,2 mm,
le système (10) comprenant un dispositif de contrôle de température (25) pour régler la température de la matière à une plage de température de 40 à 70 °C et la température de la matière est configurée pour être contrôlée soit d'un côté entrée, soit d'un côté sortie du raffineur.

2. Système selon la revendication 1, dans lequel au moins deux raffineurs (14, 14A, 14B) sont positionnés en série dans le système (10).

3. Système selon la revendication 1, dans lequel au moins deux raffineurs (17, 17A, 17B) sont positionnés en parallèle dans le système (10).

4. Système selon l'une quelconque des revendications précédentes, dans lequel le raffineur comprend un rotor, un stator et le rotor a un angle de pales de l'ordre de +/- 50° et le stator a un angle de pale de l'ordre de +/-30°.

5. Système selon l'une quelconque des revendications précédentes, dans lequel le système comprend un dispositif de préparation chimique et/ou enzymatique (21) connecté à un dispositif du système (10) situé en amont d'au moins un des raffineurs (17, 17A, 17B).

6. Système selon l'une quelconque des revendications précédentes, dans lequel le système (10) comprend au moins une ligne de rejet (R) et la ligne de rejet (R) est connectée depuis le crible à l'alimentation du raffineur, avantageusement 20 à 40 % du flux d'alimentation du raffineur s'écoulant depuis le crible.

7. Système selon l'une quelconque des revendications précédentes, dans lequel le système (10) comprend au moins une ligne de circulation (RC) vers une alimentation du raffineur, avantageusement 10 à 50 % du flux d'alimentation du raffineur venant de la ligne de recirculation.

8. Système selon l'une quelconque des revendications précédentes, dans lequel le système (10) est configuré pour fonctionner en processus continu.

9. Procédé de production de MFC, lequel procédé comprend au moins deux stades de raffinage, dans lequel une matière en pâte est raffinée dans au moins un stade de raffinage (17, 17A, 17B) à une consistance de 3 à 5 %, et lequel procédé comprend au moins un stade de criblage dans au moins un crible (17, 17A, 17B) à une consistance de 0,5 à 5 %, sachant que, dans le procédé, la température de la matière est réglée à une plage de contrôle de température de 40 à 70 °C par un dispositif de contrôle de température (25) et que la température de la matière est contrôlée soit d'un côté entrée, soit d'un côté sortie du raffineur.

10. Procédé selon la revendication 9, dans lequel le raffinage de la matière en pulpe est un raffinage mécanochimique.

11. Procédé selon la revendication 9 ou 10, dans lequel le procédé fonctionne en processus continu.

12. Procédé selon l'une quelconque des revendications 9 à 11, dans lequel le procédé comprend un stade d'épaississement pour épaissir la matière jusqu'à la température de stockage.

13. Procédé selon l'une quelconque des revendications 9 à 12, dans lequel procédé au moins 50 % du flux de matière s'écoulant dans une boucle de raffinage créée par une ligne de recirculation (RC) s'écoule également dans le flux de système de contrôle de température.
